# EUROPEAN PATENT APPLICATION

(11) **EP 1 329 798 A1**
(43) Date of publication of application: **23.07.2003**
(21) Application number: 02354010.7
(22) Date of filing: 18.01.2002
(51) Int. Cl.: G06F 1/32

(54) **Power management method and apparatus**

(71) Applicant: Hewlett-Packard Company, A Delaware Corporation, Palo Alto, CA 94304 (US)
(72) Inventor: Vicard, Dominique, 38190 Bernin (FR)
(74) Representative: Lloyd, Richard Graham (GB)

(57) **Abstract**

The present invention relates to a power management apparatus and method. Many organisations have reached an agreement with the power companies to reduce their power consumption during periods of relatively high demand. Reducing the power consumption often entails temporarily switching off air conditioning or heating or reducing the effectiveness of them. However, in some circumstances, these measures are insufficient. Therefore, the present invention is arranged to reduce the power consumption state of, for example, computers. A server transmits to each computer a network message which instructions those computers that have already entered a reduced power consumption state to adopt a different power consumption state, which has a power consumption that is less than their existing power consumption state. Since the computers that are addressed are already in a reduced power consumption state, it is very likely that the users of those machines have not used them for some time and may be away from their desk. Therefore, providing the computers are restored to their original state before the user returns or needs to use the computer, they will be oblivious to their machine having been placed in the different power consumption state. This has the advantage of allowing an organisation to meet its contractual commitments without greatly inconveniencing the users.

## Description

### Field of the Invention

The present invention relates to a power management method and apparatus.

### Background to the Invention

It will be appreciated that large commercial organisations consume significant amounts of energy. In particular, these organisations consume a significant amount of electrical energy for heating, lighting etc. Often such organisations have an agreement with their energy supplier to reduce power consumption during periods of unusually high demand by, for example, switching off or reducing the effectiveness of the heating or air-conditioning. However, in instances of particularly high demand, even these measures may be insufficient to enable the organisation to comply with the agreement.

It is an object of the present invention at least to mitigate some of the problems of the prior art.

### Summary of Invention

Accordingly, a first aspect of the present invention provides a method of operating an apparatus having a system context and comprising a power management system for placing the apparatus in at least one of first and second power states of a plurality of power states; the apparatus being arranged to consume less power in the second power state than in the first power state, and a communication device via which command data can be received from a remote device; the method comprising the steps of
entering the first power state in which the communication device remains operable and at least a portion of the system context is maintained; the step of entering including outputting data representing the system context for storage on a non-volatile storage medium;
receiving, via the communication device, first command data instructing the power management system to place the apparatus in the second power state; and
entering the second power state.

By exploiting power saving features of ACPI compliant devices, a power saving policy can be implemented by an organisation that does not inconvenience their employees greatly.

This follows from the fact that the client machines that are arranged to operate in a reduced power state are those machines that are not currently being used by the users. The user's machine is made available to the power management system when that machine has entered a power saving state. The unused machine is arranged to adopt a further power saving state in which even less power is consumed.

It is generally prudent to reduce, preferably to a minimum, any inconvenience to the users of client machines within an organisation. Therefore, embodiments provide a method, further comprising the steps of
receiving, from the remote device, second command data for instructing the power management system to place the apparatus in a power state other than the second power state;
adopting, in response to receiving the second command data, a power state other than the second power state; and
restoring the system context using the data representing the system context previously output for storage on the non-volatile storage medium.

Preferred embodiments provide a method in which the step of adopting a power state other than the second power state comprises the step of adopting the first power state. Preferably, the first power state is a safe S3/quick S4 state.

It is desirable to provide some mechanism to allow the user to place the computer in a particular power management state. Suitably, embodiments provide a method in which the step of entering the first power state is responsive to receipt or generation of an event. Preferably, the event is one of a user, computer or a communication device generated event.

Preferred embodiments provide a method in which the step of leaving the second power state comprises the step of adopting a non-power saving state.

A second aspect of the present invention provide an apparatus capable of having a system context and comprising a power management system for placing the apparatus in at least one of first and second power states of a plurality of power states; the apparatus being arranged to consume less power in the second power state than in the first power state, and a communication device via which command data can be received from a remote device; the apparatus further comprising
means to enter the first power state in which the communication device remains operable and at least a portion of the system context is maintained; including means to output data representing the system context for storage on a non-volatile storage medium;
means to receive, via the communication device, first command data instructing the power management system to place the apparatus in the second power state; and
means to place the apparatus in the second power state.

### Brief Description of the Drawings

Embodiments of the present invention will now be described, by way of example only, with reference to the accompanying drawings in which:
figure 1 illustrates a power management environment according to an embodiment of the present invention;
figure 2 shows in greater detail a client machine and a power management server of the power management environment for implementing an embodiment of the present invention;
figure 3 depicts flowcharts of the processing undertaken by a client machine and a server according to an embodiment in preparation for implementing a power management policy;
figure 4 illustrates further flowcharts of the processing performed by a client machine and a server according to an embodiment upon expiry of a period of organisational power management;
figure 5 illustrates flowcharts of the processing performed to support a user instigated wake-up for an embodiment;
figure 6 illustrates schematically prior art ACPI power management states and state transitions; and
figure 7 depicts the power states and states transitions for client machines according to preferred embodiments.

### Description of the Preferred Embodiments

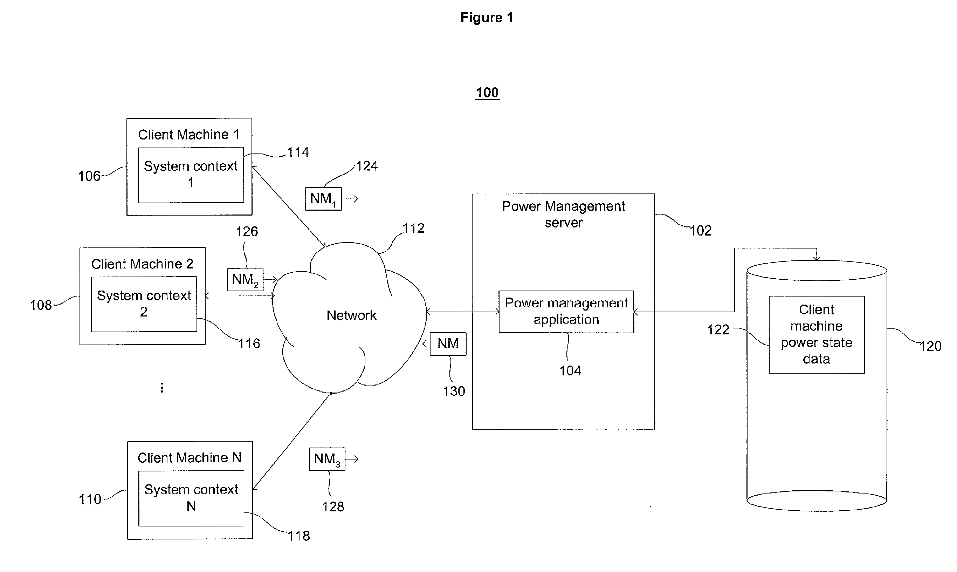

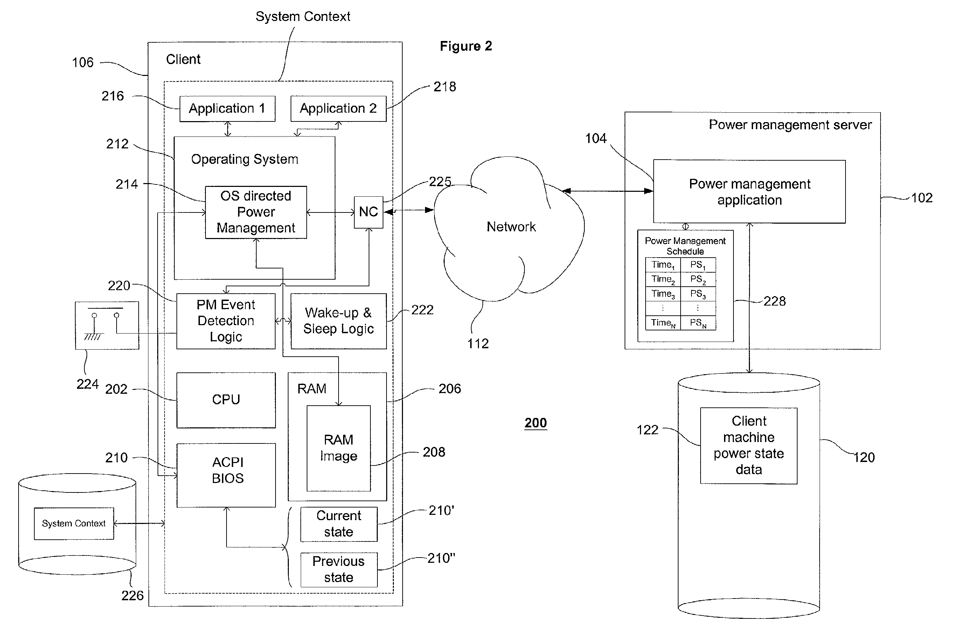

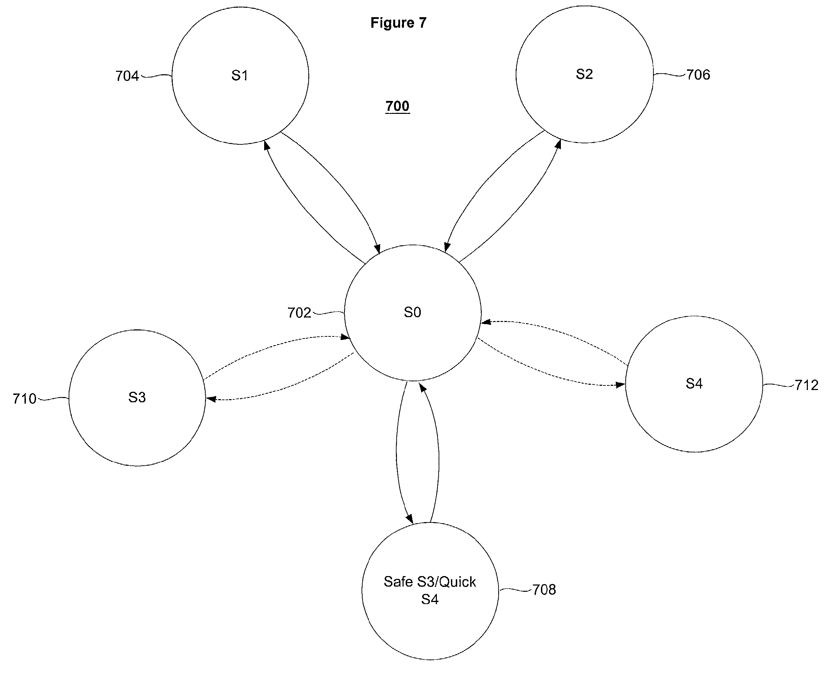

Referring to figure 1, there is shown a power management environment 100 of an organisation. The power management environment 100 comprises a power management server 102, which runs a power management application 104. The power management application 104 is arranged to control the power consumption of a number of client machines 106, 108 and 110. The power management application 104 communicates with each of the client machines 106 to 110 via a network 112. Each client machine has an associated system context 114 to 118. A system context is used by operating system directed power management software, described with reference to figure 2, to manage the power consumption of a corresponding client machine. The client machines 106 to 110 are arranged, under the control of the operating system directed power management software, to enter one of a number of power management states. The power management states may include a working state, having the highest power consumption, and a hibernate state, having the lowest power consumption. There are further, graduated, power management states between the working state and the hibernate state. Each power management state has an associated degree of power consumption and system context. The preferred power management states of embodiments are described in greater detail with reference to figure 7.

When a client machine is about to enter one of the power management states, that client machine transmits a message 124 to 128 to the power management application 104. The message 124 to 128 informs the power management application 104 of the entry of the corresponding client machine into a power management state. Preferably, the message contains an indication of the power management state adopted by the client machine. The message also contains client machine identification data for identifying the client machine to the power management application 104. Preferably, the power management state reported by the message is a state other than the working state, but may include the working state.

In preferred embodiments, the client machines 106 to 110 report to the power management server 102 upon entry into a safe S3/quick S4 state, which is described in greater detail with reference to figure 7.

The power management server 102 has an associated HDD 120 for storing power state data 122 identifying which, if any, of the client machines have entered one of the reduced power consumption states of the power management states. In preferred embodiments, the power state data 122 is derived from the messages 124 to 128 transmitted by those client machines 106 to 110 that have adopted a power management state other than the working state.

Prior to entering a period for which the organisation has agreed to reduce power consumption, the power management application 104 retrieves the power state data 122 from the HDD 120 and transmits a network message 130 to each of the client machines identified by that data. The network message 130 contains data that instructs the identified client machines to adopt a different power management state. It will be appreciated that the client machines will already be in a reduced power consumption state. Therefore, in preferred embodiments, the network message data instructs the client machines 106 to 110 to enter a power management state having a lower power consumption than a current power management state. In preferred embodiments, the lower power consumption state, or second power state, corresponds to the hibernate or S4 state.

The client machines, when in power management states other than the working state, can still receive and respond to network messages. Therefore, once the period of time for which an organisation has agreed to reduce power consumption has passed, the power management application 104 broadcasts to each, or a portion, of the client machines, a wake-up network message. The wake-up network message contains data instructing the client machines 106 to 110 to restore their previous power management state. Alternatively, or additionally, the client machines may be instructed to enter a predetermined power management state or to enter a state that is prescribed by the network message.

The system context of a client machine is saved prior to entering a power saving state. The system context is used to allow the client machines 106 to 110 to be placed in a power saving state. Upon detection of a wake-up event, a wake-up process is instigated in which the system context is restored and the client machine is arranged to adopt another power management state. The other state is usually the working state.

Figure 2 illustrates in greater detail a selected client machine and power management server arrangement 200. The arrangement 200 shows one of the client machines, that is, client machine 106, which has a processor 202 and RAM 206 containing a RAM image 208. In general, the client machines 106 to 110 use ACPI specification power management. Therefore, the client machine 106 also comprises a BIOS 210, which supports ACPI routines. The client machine 106 has an operating system 212, which is arranged to implement operating system directed power management (OSPM) using associated OSPM software 214.

The client machine 106 transmits and receives network messages via a network card 225. The client machine 106 may run various applications 216 and 218. Additional hardware and software functionality is provided in the form of power management event detection logic 220, which detects events in response to which the current power management state of the client machine 106 may be changed to another power management state. For example, the user may depress an ON/OFF button 224, in response to which the client machine 106 may effect a transition from a current sleeping state to a working state. Alternatively, the ON/OFF button 224 may be used to instigate a software shutdown of the client machine 106. To effect a software shutdown, the client machine 106 should adopt a reduced power consumption state of the power management states.

As described above, a particular event to which the client machines are arranged to respond is a network-generated event, which signals to the OSPM software 214 that data is being received and the network card 225 and the RAM should be suitably powered-up to allow reception of the data.

The power management event detection logic 220 is used to cause wake-up and sleep logic 222, in conjunction with the OSPM software 214, to restore the system context and to place the client machine 106 in one of the power management states. The system context is stored on a locally accessible HDD 226 during adoption of a reduced power consumption state.

Although this embodiment uses a network card 225, it will be appreciated that other embodiments may use some other communication device for communicating with the server. For example, a wireless LAN may be used to communicate with the server. The wireless LAN will have a transceiver as opposed to a network card. Alternatively, or additionally, a modem may be used to support network message exchanges. Still further, the device for receiving the command to enter a power saving mode of operation may be connected to the client machine via a USB connection. For example, AUSB may be used to listen for power alerts that have been broadcast using conventional radio frequencies in a manner that is similar to RDS being transmitted over conventional music radio channels. Still further, the command to enter a power saving mode of operation may be transmitted to the client machine by modulation of the power supply or by superimposing a signal on the power supply signal. In this manner, the device for listening for the command to enter a reduced power consumption state may be incorporated into the client machine.

The current power management state of a client machine is stored within an ACPI storage area 210'. The previous power management state is stored within an ACPI storage area 210". The previous power management state can be used, in the absence of the network message 130 containing an indication of the power management state to be adopted, as a default power management state to be entered by the client machine in response to receiving the network message 130.

The server 102 preferably uses a power management schedule 228 to control the timing of the implementation of the organisation's power management policy. The schedule 228 contains preferred times, Time₁ to Time_{N}, at which the client machines identified by the power state data 122 should adopt a low power consumption state. Preferably, since a client machine can enter any one of a number of possible power management states, the power management schedule 228 also contains an indication of the power management states, PS₁ to PS_{N}, that should be adopted by the client machines.

It will be appreciated that the first time, Time₁, may represent a time at which all addressed client machines should adopt a lower power management state. The second time, Time₂, may represent a time at which the addressed client machines can revert back to their original power management state or can adopt a higher power management state prescribed by the corresponding power state, PS₂.

In some embodiments, the absence of a prescribed power management state may be interpreted by the client machines as an instruction to adopt a previous power management state, as determined from the data contained within the ACPI storage areas, the highest power management state or the lowest power management state or to change, in a relative direction, by a predetermined number of the power management states.

In some circumstances, the power management application 104 may instruct the client machines to leave a current working state and to adopt one of the lower power management states.

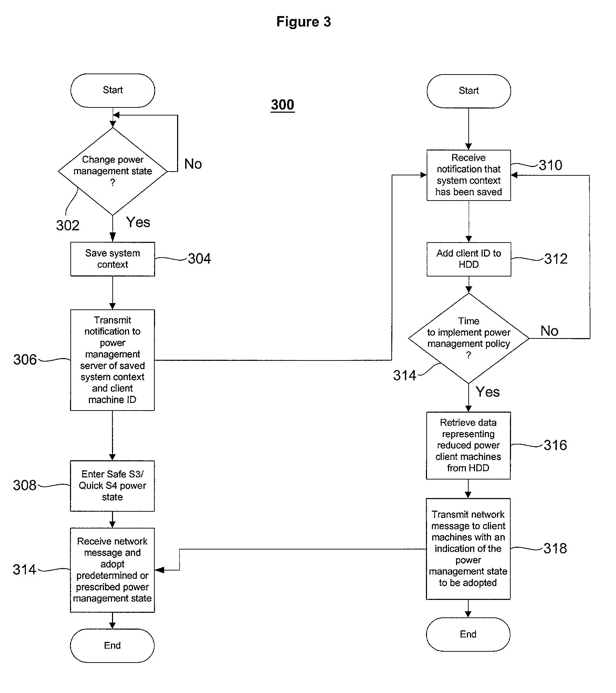

Referring to figure 3, there is shown schematically a pair of flowcharts 300 for operating the power management environment 100 according to an embodiment. A determination is made at step 302 as to whether a power management state other than the current state should be adopted by the client machine 106. The current state is usually the working state. The decision may be based on a period of user inactivity or an event for forcing a change to another power management state. If the determination is positive, the client machine saves the current system context to the HDD 226 at step 304 and updates the current and previous power management state data in the associated storage areas 210' and 210".

A message is transmitted, at step 306, to the power management server 102 that the client machine 106 is about to enter a power saving state. The message also contains data identifying the client machine. At step 308, the client machine, having transmitted the network message, enters a prescribed power management state. In preferred embodiments, the prescribed power management state is the safe S3/quick S4 state, which is described hereafter. It will be appreciated that the network card 225 and the power management event detection logic 220 are still responsive to network events during this state.

The power management server 102, at step 310, receives the network message. The power management server, at step 312, adds to the power state data 122, representing those machines that have entered a stand-by state, the client machine identification data contained within the received network message. A determination is made at step 314 as to whether or not it is time to implement the organisation's power management policy. It will be appreciated that rather than this step having an if...then format, a more practical realisation would use some form of timed interrupt process which causes the power management server 102 to instigate implementation of the power management policy in response to that interrupt process. If the determination at step 314 is negative, control is returned to step 310. If the determination is positive, the power management application 104, at step 316, retrieves the data 122 representing those client machines that have adopted a reduced power management state and transmits, at step 318, the network message 130 to instruct the client machines to enter an even lower power consumption state. Preferably, as indicated above, the even lower power consumption state is the S4 hibernate state.

The network message 130 may contain an indication of the lower power consumption state to be adopted or may instruct the client machines to adopt the next lowest power consumption state. It will be appreciated that the latter encompasses a transition from a working state to a safe S3/quick S4 state or from a safe S3/quick S4 state to the S4 or hibernate state.

Since the user's machine is unused in the safe S3/quick S4 state, that is, it is in a state other than the working state, the user, at the time of the implementation of the power management policy, will be unaware that their client machine has changed its power consumption state.

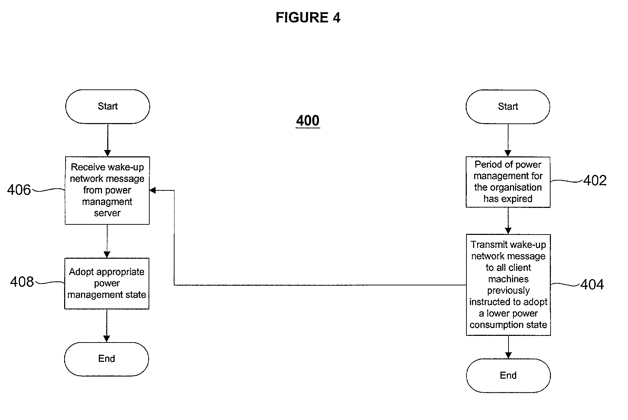

Figure 4 shows a pair of flowcharts 400 for restoring the power management states of the client machines following expiry of the organisation's period of power management. At step 402, the power management application 104 determines that the power management period has expired. In response to that determination, at step 404, the power management application 104 transmits a wake-up network message to all of the client machines that were previously instructed to adopt a lower power consumption state. As indicated above, even in reduced power consumption states, the network card 225 and the power management event detection logic 220 are operable to detect and respond to network generated events.

At step 406, a client machine receives the wake-up network message, which causes the client machine to recover from an existing power management state to a previous or a specified power management state. The client machine is arranged, by the OSPM software 214, to assume an appropriate power management state at step 408.

If the embodiments are arranged to adopt a previous power management state, the data relating to that state is retrieved from the ACPI storage area 210". Once the power management states have been changed, the data contained within the ACPI storage areas 210' and 210" are updated accordingly.

If the embodiments are arranged to adopt a prescribed power management state, the data identifying that prescribed power management state is extracted from the wake-up network message and the OSPM software 214 is arranged to place the client machine in that prescribed power management state. Again, the data identifying the current and previous power management states are updated.

Since the client machines are returned, in preferred embodiments, to their former power management state, including restoration of their system context, the user is unaware that their machine had entered a lower power management state. This has the significant advantage that the user is not inconvenienced by the power management policy of the organisation.

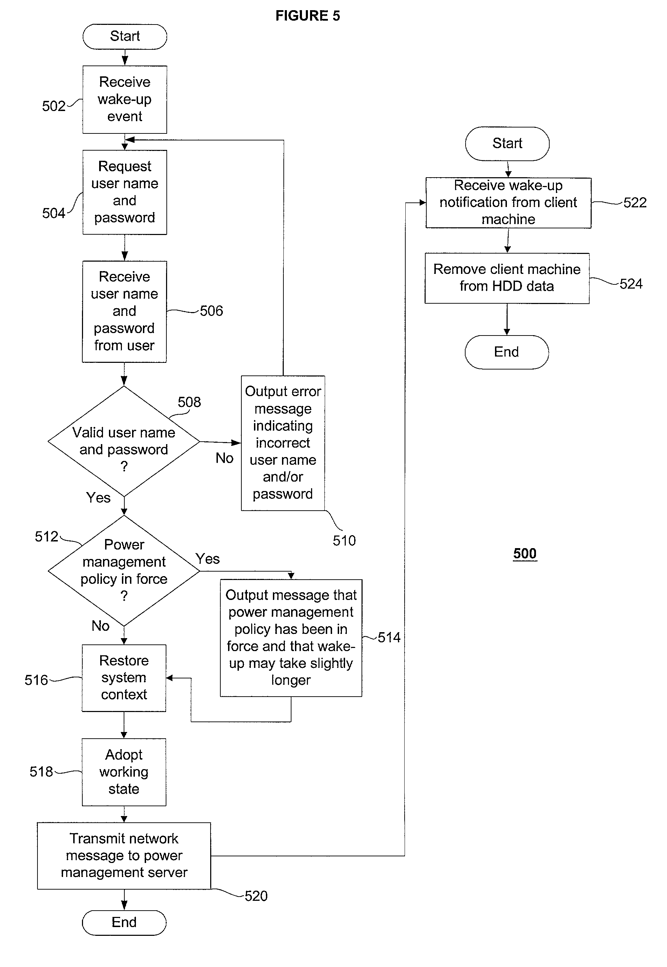

Referring to figure 5, there is shown a pair of flowcharts 500 for dealing with the situation where a user returns to their client machine having left it for a sufficient period of time to cause the client machine to enter the safe S3/quick S4 state and for the power management application 104 to cause that machine to enter an even lower power management state.

The user, using the input device 224, generates a wake-up event that is detected by the power management event detection logic 220. The wake-up event is received at step 502. At step 504, the power management event logic 220 informs the wake-up and sleep logic 222 of the event which, in turn, causes the ACPI BIOS 210 to output a log-on screen that requests the user to input their user name and password. At step 506, the user name and password are received. It is determined, at step 508, whether a valid user name and password have been entered. If either of the user name or the password is invalid, an error message is output, at step 510, containing an indication to that effect and control returns to step 504.

However, if a valid user name and password were entered at step 508, it is determined, at step 512, whether or not the client machine has previously been placed in a power management state by the power management application 104. The data identifying whether or not the client machine has been placed in a power management state by the application 104 is stored in the BIOS storage areas 210' and 210" and is accessible via the ACPI BIOS 210. If the determination is that the organisation's power management policy is in force, a message is output, at step 514, indicating that the client machine had entered a lower power state and that system restoration may take slightly longer than anticipated. Control then passes to step 516 where the system context is restored.

However, if the organisation's power management policy is not in force, the system context of the client machine is retrieved from the HDD 226 and restored at step 516. Since the wake-up event was user generated, preferably, the client machine is placed in the working state at step 518.

Having arisen from a sleep-state, that is, a power management state other than the working state, the client machine preferably transmits a network message to the power management application 104 at step 520. The network message contains identification data for identifying the client machine to the server 102 and, preferably, an indication of the current working state of the client machine.

The power management application 104 receives the transmitted network message at step 522. In response to receiving the network message, the power management application 104, at step 524, extracts the client machine identification data and uses that extracted data to remove the client machine from the power state data 122.

It will be appreciated that the embodiments advantageously use the common interface for enabling robust operating system directed motherboard system configuration and power management (OSPM) of the client machines 106 to 110. In particular, the Advanced Configuration and Power Interface (ACPI) specification assists in solving the above prior art problems. The current version of the ACPI is version 2, having a release date of July 27, 2000 together with the ACPI Errata version 1.3, November 27, 2000, both of which are incorporated herein by reference for all purposes.

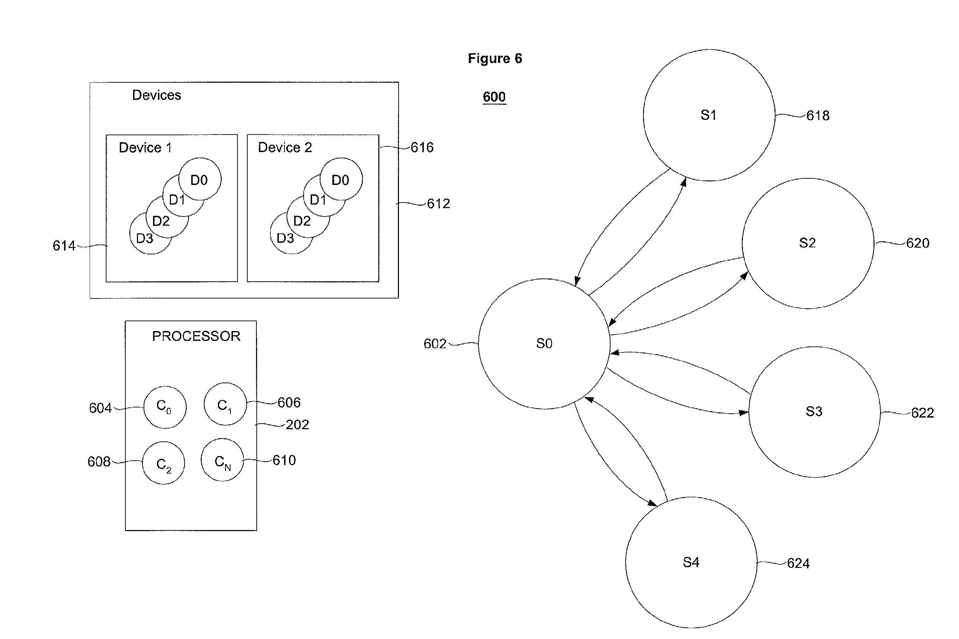

These standards define the following known power management states 600, which are shown in and described with reference to figure 6.

State S0: While a system or client machine is in state S0 602, the system is said to be in a working state. The behaviour of that state is defined such that a processor 202, or, in a multi-processor system, the processors are, in one of a number of so-called processor states, C₀ 604, C₁ 606, C₂ 608,..., C_{N} 610, which each represent varying degrees of processor operation and associated power consumption. The processor maintains the dynamic RAM context. Any devices 612, such as first 614 and second 616 devices, connected to, or forming part of, the client machine are individually managed by the operating system software and can be in any one of four possible device states D0-D3, which, again, reflect varying degrees of power consumption. Any associated power resources are arranged to be in a state that is compatible with the device states.

State S1: The S1 state 618 is a low wake-up latency sleeping state. In this state, no system context is lost (CPU or chip set) and the system hardware maintains all system context.

State S2: The S2 state 620 is also considered to be a low wake-up latency sleeping state. The S2 state 620 is substantially similar to the S1 state 618 but for the CPU and the system cache context being lost in the S2 state, since, typically, the operating system is responsible for maintaining cache and processor context.

State S3: The S3 state 622 is a low wake-up latency sleeping state where all system context is lost except for system memory. The CPU, cache and chip set context are lost in this state. However, the system hardware maintains memory context and restores some CPU and L2 configuration context.

State S4: The S4 state 624 is the lowest power, longest wake-up latency, sleeping state supported by the ACPI. To reduce power consumption, preferably to a minimum, it is assumed that the hardware platform has powered-off all devices. Platform context is maintained.

It will be appreciated that embodiments can be realised in which the power management states correspond to the above described S0 to S4 states, providing the client machines, in those states, can still respond to a message received from the power management application 104.

However, figure 7 shows a power management state and associated state transition diagram 700 for a preferred embodiment. The state transition diagram 700 comprises a working system state S0 702. Preferably, conventional states S1 704 and S2 706 are also supported. The states S0-S2 702 to 706 are substantially identical in operation and realisation to the corresponding states described above in relation to figure 6.

Additionally, the state diagram 700 illustrates a new state, that is, a Safe S3/Quick S4 state 708 (SS3/QS4). The behaviour of the client machine 106 in the SS3/QS4 state 708 can be characterised by the actions of saving substantially the same data as the conventional S4 state while concurrently maintaining in memory the same data as the conventional S3 state. Furthermore, in the SS3/QS4 state 708 only the RAM 206 remains in a powered state while all other aspects of the client machine 106 adopt substantially the same powered state of the conventional S3 state but for the network card 225 and the power management event detection logic 220 to allow a wake-up from that state.

Therefore, if a power failure occurs while the system is in the SS3/QS4 state 708, loading the data representing the system context is retrieved from the HDD 226 and the system context is established accordingly. In contrast to the prior art power management state S3, if a power failure occurs, the system context is recoverable.

In the absence of a power failure, the system context, when waking from the SS3/QS4 state 708, can be restored within a relatively short period of time, such as, for example, 5 seconds, that is, within a time scale that is comparable to the wake-up time for a conventional S3 state but with the additional security of also being recoverable from a power failure, unlike the conventional S3 state.

Preferably, once the context has been restored following a power failure, the system enters or resumes the SS3/QS4 state 708. However, it will be appreciated that embodiments could be realised in which any one of the states are entered upon recovery, as can be seen from the optional presence of the conventional S3 710 and S4 712 states.

Furthermore, even though the above embodiments have been described in terms of having a number of system states, the present invention is not limited to such system states. Embodiments can be realised in which other states such as, for example, Legacy states, mechanical-off states G3 and soft-off S5 states are also supported.

It will be appreciated that the power management application 104 can instruct the client machines to assume any one of the power management states illustrated in figures 6 and 7.

Although the above embodiments use an HDD 226 as the non-volatile storage medium, it will be appreciated that other forms of non-volatile storage media may be used. For example, a locally or remotely accessible flash-memory may be used to store the data to allow recovery from a power failure or to allow wake-up from a sleep state. Alternatively, a remotely, or network accessible, HDD can be used to store the system context.

Furthermore, although the above embodiments have been described with reference to client machines reporting to the power management application that a reduced power consumption state has been entered, the present invention is not limited to such arrangements. Embodiments can be realised that report entry into the working state, preferably, in addition to reporting entry into a reduced power consumption state of the power management states. Therefore, the data 122 stored on the HDD 120 of the power management server 102 will store data identifying the client machines with which it can communicate and their corresponding power management states.

Although the above embodiments have been described with reference to client machines being placed in a power saving mode using a LAN and a server of the organisation, the present invention is not limited to such arrangements. Embodiments can be realised in which a communication device, provided by the energy supplier, is interfaced with a client machine. The communication device is arranged to supply the commands to the OSPM to enter or to recover from a reduced power consumption power management state. The communication device may operate according to a predetermined schedule. Alternatively, or additionally, the communication device may receive wireless commands from a transmitter and control centre of the energy supplier. These wireless commands may be used to control the power management states of the client machine to which the communication device is attached.

It will be appreciated that the client machines can be addressed by the power management application 104 either globally, using some form of broadcast message, or individually using corresponding addresses. Furthermore, the globally addressed or individually addressed client machines may be placed in the same power management state or in respective power management states.

Although the power management application 104 retrieves the power state data 122 from the HDD 120 and uses that data to instruct various client machines to enter a power saving mode of operation, the present invention is not limited to such embodiments. Embodiments can be realised in which the power management application 104 transmits a broadcast message to all machines connected to the intranet or PC park. In such embodiments, the client machines will respond accordingly. If the client machine is in a working state, the client machine may be configured to ignore the request. Alternatively, the client machine may simply output an indication of the receipt of the request to the user, who may then decide whether or not to enter a power saving mode of operation. If the client machine is already in a power saving mode of operation, such as the safe S3/quick S4 state, or is in a stand-by state, the client machine, in response to receiving the broadcast message, will enter the lowest power saving state of operation. If the broadcast message contains an indication of the preferred power state to be adopted, the client machine, when appropriate, will assume that prescribed state of operation.

The above embodiments have been described with reference to placing a client machine in a power saving state. However, the present invention is not limited to such an arrangement. Embodiments can equally well be realised in which other devices or apparatus are placed in a power saving state. For example, the printers, fax machines, digital senders, scanners, photocopiers and other electronic devices that are connected to the organisations intranet, or that are used by the organisation, may be arranged to enter an appropriate power saving mode of operation during a period for which the organisation's power management policy is in force. It will be appreciated that any such devices or apparatus would preferably need access to non-volatile storage to preserve their system context, if needed. In effect, embodiments may be realised using any ACPI compliant devices.

It will be appreciated that the data collected by the server on when power saving measures were in force may be used to provide evidence to the energy supplier that the organisation has complied with its agreement with the energy supplier.

It will be appreciated that in a stand-by state of the power management states, that is, in the safe S3/quick S4 state, a client machine may consume about 5 Watts per hour whereas in a hibernate state the client machine consumes about 2 or 3 Watts per hour. In both instances, the power consumed is less than that of the working state S0.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A method of operating an apparatus having a system context and comprising a power management system for placing the apparatus in at least one of first and second power states of a plurality of power states; the apparatus being arranged to consume less power in the second power state than in the first power state, and a communication device via which command data can be received from a remote device; the method comprising the steps of
entering the first power state in which the communication device remains operable and at least a portion of the system context is maintained; the step of entering including outputting data representing the system context for storage on a non-volatile storage medium;
receiving, via the communication device, first command data instructing the power management system to place the apparatus in the second power state; and
entering the second power state.

2. A method as claimed in claim 1, further comprising the steps of
receiving, from the remote device, second command data for instructing the power management system to place the apparatus in a power state other than the second power state;
adopting, in response to receiving the second command data, a power state other than the second power state; and
restoring the system context using the data representing the system context previously output for storage on the non-volatile storage medium.

3. A method as claimed in claim 2, in which the step of adopting a power state other than the second power state comprises the step of adopting the first power state.

4. A method as claimed in any preceding claim, in which the step of entering the first power state is responsive to receipt or generation of an event.

5. A method as claimed in claim 4, in which the event is at least one of a user, apparatus or a communication device generated event.

6. An apparatus capable of having a system context and comprising a power management system for placing the apparatus in at least one of first and second power states of a plurality of power states; the apparatus being arranged to consume less power in the second power state than in the first power state, and a communication device via which command data can be received from a remote device; the apparatus further comprising
means to enter the first power state in which the communication device remains operable and at least a portion of the system context is maintained; including means to output data representing the system context for storage on a non-volatile storage medium;
means to receive, via the communication device, first command data instructing the power management system to place the apparatus in the second power state; and
means to enter the second power state.

7. An apparatus as claimed in claim 6, further comprising
means to receive, from the remote device, second command data to instruct the power management system to place the apparatus in a power state other than the second power state;
means to adopt, in response to receiving the second command data, a power state other than the second power state; and
means to restore the system context using the data representing the system context previously output for storage on the non-volatile storage medium.

8. An apparatus as claimed in claim 7, in which the means to adopt a state other than the second power state comprises means to adopt the first power state.

9. An apparatus as claimed in any of claims 6 to 8, in which means to enter a first power state is responsive to receipt or generation of an event.

10. An apparatus as claimed in claim 9, in which the event is at least one of a user, apparatus or a communication device generated event.

11. A computer program element comprising computer program code for implementing a method or an apparatus as claimed in any preceding claim

12. A computer program product comprising a computer readable storage medium having stored thereon a computer program element as claimed in claim 11.
